# DEMANDE DE BREVET EUROPEEN

(11) **EP 1 445 807 A2**
(43) Date de publication de la demande: **11.08.2004**
(21) Numéro de dépôt: 04290279.1
(22) Date de dépôt: 03.02.2004
(51) Int. Cl.: H01M 2/02, H01M 2/20

(54) **Batterie comportant plusieurs cellules et procedé pour connecter les cellules d'une telle batterie**

(30) Priorité: 06.02.2003 FR 0301422
(71) Demandeur: Delphi Technologies, Inc., Troy, MI 48098 (US)
(72) Inventeur: Ammer, Jean-Philippe, 57910 Neufgrange (FR)
(74) Mandataire: Blot, Philippe Robert Emile

(57) **Abrégé**

La batterie comporte une pluralité de cellules (20) possédant chacune un plot positif et un plot négatif s'étendant à partir de la cellule, chaque cellule présentant lesdits plots positif et négatif dans une orientation convenant pour obtenir une configuration désirée de bornes en forme de plots de la batterie. La batterie comporte également une pluralité d'inserts métalliques (70) servant à connecter électriquement en série chaque cellule de la pluralité de cellules, ladite pluralité d'inserts métalliques étant adaptée pour établir un contact électrique sélectif entre un plot positif d'une première cellule et un plot négatif d'une seconde cellule de ladite pluralité de cellules et pour fournir la configuration désirée de bornes formée de plots de la batterie.

Application notamment aux accumulateurs au plomb.

## Description

La présente demande concerne d'une manière générale le domaine des batteries. De façon plus spécifique, la présente demande concerne une batterie possédant une pluralité de cellules de batterie et un procédé pour sa fabrication.

Les batteries ou accumulateurs au plomb possèdent une pluralité de cellules comportant chacun un élément de cellule qui est exposé à des électrolytes pour produire un courant continu au moyen d'une réaction chimique. Les éléments de cellule incluent une pluralité de plaques positives et négatives entre lesquelles sont intercalés une pluralité de séparateurs. Chacune des plaques (positives et négatives) incluent des parties formant pattes. Dans certaines configurations, les éléments de cellules sont maintenus en compression pour qu'il existe un contact permanent entre les plaques et les séparateurs.

Les cellules sont connectées électriquement entre elles de manière à former une connexion en série et plus communément, les cellules les plus extérieures sont également connectées à des moyens permettant de former une borne positive et une borne négative pour la connexion à un autre dispositif. Cependant, dans certaines applications, il est souhaitable de prévoir les bornes positive et négative du même côté de la batterie, et non sur des côtés opposés de la batterie. Dans de tels cas, la connexion des cellules les plus extérieures aux bornes négative et positive s'avère difficile et requiert différentes configurations de cellules et/ou des connecteurs de cellules à l'intérieur de la batterie.

Le but de la présente invention est de fournir une batterie permettant de choisir une configuration voulue des bornes de la batterie.

A cet effet, l'invention a pour objet une batterie comportant une pluralité de cellules, caractérisée en ce qu'elle comprend :
- une pluralité de cellules possédant chacune un plot positif et un plot négatif s'étendant à partir de la cellule, chaque cellule étant disposée dans un boîtier de batterie possédant une configuration interne apte à recevoir ladite cellule, chaque cellule possédant ledit plot positif et ledit plot négatif dans une orientation, par rapport audit boîtier de la batterie, convenant pour obtenir une configuration désirée de bornes en forme de plots de la batterie, et
- une pluralité d'inserts métalliques servant à connecter électriquement en série chaque cellule de ladite pluralité de cellules, ladite pluralité d'inserts métalliques étant adaptée pour établir un contact électrique sélectif entre un plot positif d'une première cellule et un plot négatif d'une seconde cellule de ladite pluralité de cellules, et pour fournir la configuration désirée de bornes en forme de plots de la batterie.

Suivant d'autres caractéristiques de cette batterie, prises isolément ou selon toutes les combinaisons techniquement possibles :
- chaque cellule comprend un élément de cellule, le boîtier de batterie définissant une zone de réception et étant configuré de manière à recevoir la pluralité d'éléments de cellule, un élément de cellule comprenant une pluralité de plaques positives possédant chacune une partie formant patte positive qui s'étend vers l'extérieur à partir de la périphérie de la plaque, et une pluralité de plaques négatives possédant chacune une partie formant patte négative s'étendant vers l'extérieur à partir de la périphérie de la plaque, un séparateur non conducteur étant disposé entre chaque plaque positive et chaque plaque négative adjacentes, chaque élément de cellule comprenant :
   - une barrette positive fixée à chacune desdites parties en forme de pattes positives dudit élément de cellule, ladite barrette positive comportant le plot positif de l'élément de cellule, et
   - une barrette négative fixée à chacune desdites parties en forme de pattes négatives dudit élément de cellule, ladite plaque négative comportant le plot négatif de l'élément de cellule,
      et la batterie comporte un capot intérieur configuré de manière à recouvrir lesdites plaques positives et négatives, ledit capot intérieur étant configuré de manière que lesdits plots positifs et lesdits plots négatifs le traversent ;
   - l'insert métallique connecte électriquement un plot positif d'un premier élément de cellule à un plot négatif d'un second élément de cellule, le second élément de cellule étant soit un élément de cellule contigu, soit un élément de cellule éloigné présentant au moins un autre élément de cellule disposé entre les premier et second éléments de cellule ;
   - chacun des éléments de cellule est connecté en série pour fournir au moins deux configurations différentes de bornes en forme de plots de la batterie par rapport audit boîtier de la batterie ;
   - une pluralité de parois de retenue entourent une paire d'ouvertures configurées de manière à permettre le passage d'un plot positif et d'un plot négatif d'éléments de cellule adjacents ;
   - les ouvertures comportent chacune un joint torique configuré de manière à recevoir et à coopérer avec une partie du plot positif et du plot négatif lorsque ces derniers traversent les ouvertures ;
   - le capot intérieur définit une pluralité de zones de réception servant à recevoir l'insert métallique ;
   - la pluralité de zones de réception est définie par une pluralité de parois de retenue ;
   - chaque cellule possède une configuration extérieure agencée de manière à être reçue à l'intérieur d'une zone de réception complémentaire définie dans ledit boîtier de la batterie ;
   - l'insert métallique est un insert en plomb ou en cuivre ;
   - la pluralité de cellules sont alignées suivant une seule rangée ;
   - la configuration désirée des bornes en forme de plots de la batterie inclut une borne en forme de plot positive et une borne en forme de plot négative disposées sur au moins une des extrémités ou sur les deux extrémités du boîtier de la batterie ;
   - l'insert métallique inclut un premier insert métallique configuré de manière à connecter électriquement un plot positif d'un premier élément de cellule à un plot négatif d'un second élément de cellule, le second élément de cellule étant un élément de cellule contigu ;
   - l'insert métallique inclut un second insert métallique configuré de manière à connecter un plot positif d'un premier élément de cellule à un plot négatif d'un second élément de cellule, ledit second élément de cellule étant éloigné dudit premier élément de cellule, avec au moins un autre élément de cellule intercalé entre ces éléments de cellule ;
   - chaque élément de cellule de ladite pluralité d'éléments de cellule est placé dans l'un des groupes formés soit de deux éléments de cellule soit d'un seul élément, les barrettes d'un groupe étant alignées avec les barrettes ayant une polarité opposée d'un groupe contigu ; et
   - les barrettes ayant des polarités similaires des cellules de chacun des groupes formés de deux éléments de cellule sont alignées.

L'invention a en outre pour objet un procédé d'assemblage qui consiste à :
- choisir une configuration désirée de bornes en forme de plots de la batterie,
- insérer une pluralité de cellules possédant chacune un plot positif et un plot négatif, qui s'étendent à partir des cellules, dans un boîtier de batterie possédant une configuration interne servant à recevoir ladite cellule, chaque cellule possédant lesdits plots positif et négatif étant insérée dans une orientation convenant pour obtenir ladite configuration désirée des bornes en forme de plots de la batterie, et
- connecter électriquement en série chaque cellule de ladite pluralité de cellules en prévoyant une pluralité d'inserts métalliques pour établir un contact sélectif entre un plot positif d'une première cellule et un plot négatif d'une seconde cellule de ladite pluralité de cellules.

Selon d'autres caractéristiques de ce procédé, prises ensemble ou selon toutes les combinaisons techniquement possibles :
- les inserts métalliques sont soudés audit plot positif et audit plot négatif de cellules différentes de ladite pluralité de cellules ;
- les inserts métalliques sont disposés au-dessus d'une partie formant capot insérée entre ladite pluralité de cellules et lesdits inserts métalliques, une partie desdits plots positifs et une partie desdits plots négatifs traversant des ouvertures situées dans ladite partie formant capot ;
- le choix d'une configuration désirée des bornes en forme de plots de la batterie inclut le choix que les bornes en forme de plots de la batterie soient disposées à une extrémité ou bien aux deux extrémités de la batterie ;
- le choix de ladite configuration des bornes en forme de plots de la batterie aux deux extrémités de la batterie inclut l'insertion d'une première cellule et d'une seconde cellule ayant des plots positifs et négatifs dans une même orientation, des troisième et quatrième cellules contiguës ayant des plots positifs et négatifs orientés dans un sens opposé à ceux desdites première et seconde cellules;
- la première cellule est connectée électriquement à ladite troisième cellule par des plots correspondants ayant des polarités opposées, ladite seconde cellule étant disposée entre lesdites première et troisième cellules, et ladite seconde cellule est connectée électriquement à ladite quatrième cellule par des plots correspondants ayant des polarités opposées, ladite troisième cellule étant intercalée entre lesdites seconde et quatrième cellules ;
- deux cellules éloignées situées à l'opposé desdites bornes formées de plots positive et négative sont connectées en série par des plots ayant des polarités opposées ;
- le choix de la configuration des bornes en forme de plots de la batterie sur des extrémités opposées de la batterie inclut l'insertion de chaque cellule ayant des plots positif et négatif avec une même orientation suivant laquelle chaque cellule contiguë possède des plots positif et négatif ayant une orientation opposée ; et
- chaque cellule est connectée électriquement à une cellule contiguë par l'intermédiaire de plots correspondants ayant une polarité opposée.

D'autres caractéristiques et avantages de la présente invention ressortiront de la description donnée ci-après à titre d'exemple et, prise en référence aux dessins, sur lesquels :
- la figure 1 est une vue en perspective d'un exemple de forme de réalisation d'un boîtier de batterie ;
- la figure 2 est une vue en perspective d'une cellule de batterie agencée conformément à un exemple de forme de réalisation de la présente invention ;
- la figure 3 est une vue éclatée d'une partie d'une cellule de batterie ;
- la figure 4 est une vue en perspective d'une cellule de batterie assemblée ;
- la figure 5 est une vue en perspective d'une cellule de batterie agencée conformément à un exemple de forme de réalisation de la présente invention ;
- la figure 6 est une vue en perspective d'une cellule de batterie agencée conformément à un exemple de forme de réalisation de la présente invention ;
- la figure 7 est une vue en perspective d'une cellule de batterie agencée conformément à un exemple de forme de réalisation de la présente invention ;
- la figure 8 est une vue en coupe transversale illustrant une partie du processus de fixation des cellules d'une batterie agencées conformément à un exemple de forme de réalisation de la présente invention ;
- la figure 9 est une vue en perspective d'une batterie comportant des cellules disposées conformément à un exemple de forme de réalisation de la présente invention ;
- la figure 10 est une vue en perspective d'une batterie comportant des cellules disposées conformément à un exemple de forme de réalisation de la présente invention ;
- la figure 11 est une vue en plan de la batterie de la figure 9 ; et
- la figure 12 est une vue en plan de la batterie de la figure 10.

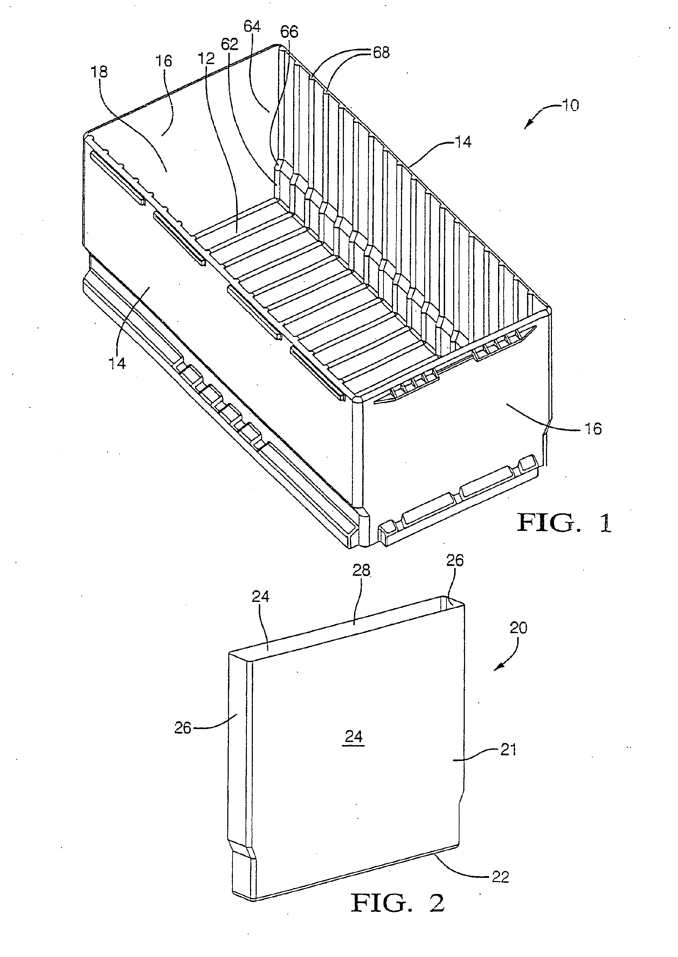

En référence aux figures et notamment à la figure 1, est représenté un boîtier de batterie 10 pour une batterie agencée conformément à un exemple de forme de réalisation de la présente invention. Le boîtier 10 de la batterie inclut un fond 12, une paire de parois latérales opposées 14 et une paire de parois d'extrémité 16. Le fond 12, les parois latérales 14 et les parois d'extrémité 16 définissent un compartiment intérieur 18.

Une utilisation envisagée pour la batterie se situe dans des applications à des automobiles; cependant, on envisage d'utiliser la batterie dans n'importe quelle application requérant un milieu de mémoire électrique.

La surface intérieure des parois latérales 14 et la surface intérieure du fond 12 sont configurées de manière à recevoir et maintenir une pluralité de cellules (non représentées) qui sont insérées dans le compartiment intérieur 18.

En se référant maintenant à la figure 2, est représenté un exemple de forme de réalisation d'une cellule 20. Chaque cellule 20 comporte un boîtier 21 comprenant un fond 22, une paire de parois latérales opposées 24 et une paire de parois d'extrémité 26 servant à définir un compartiment interne 28. Dans une forme de réalisation prise à titre d'exemple, le fond 22, les parois latérales 24 et les parois d'extrémité 26 sont formées d'un polymère comme par exemple, sans qu'il n'y ait là aucune limitation, une matière plastique ABS qui résiste aux caractéristiques corrosives de l'électrolyte.

La portée de la présente invention n'est pas censée être limitée aux dimensions des objets représentés et à la configuration indiquée sur les figures. En outre, bien que l'on ait décrit le boîtier 21 comme étant une unité séparable par rapport au boîtier 10 de la batterie, d'autres exemples de formes de réalisation incluent un boîtier 21 solidaire du boîtier 10 de la batterie.

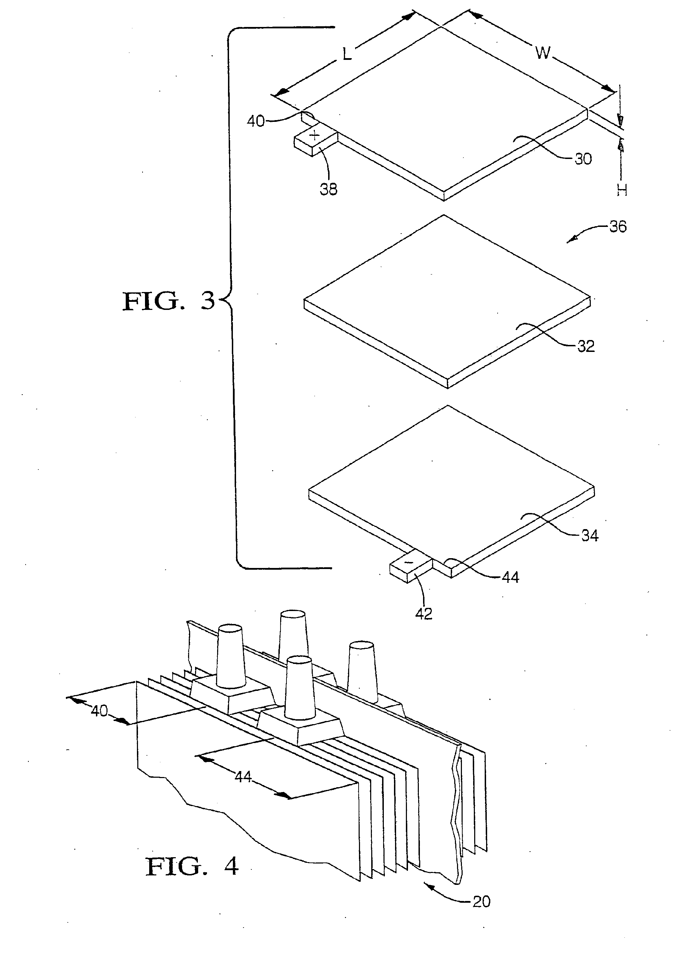

En se référant maintenant à la figure 3, on voit qu'un compartiment interne 28 est configuré de manière à recevoir un élément de cellule comprenant: une pluralité de plaques de batterie positives 30, une pluralité de séparateurs 32 et une pluralité de plaques de batterie négatives 34. Les plaques de batterie positives 30, les séparateurs 32 et les plaques de batterie négatives 34 sont de préférence configurés sous la forme d'un empilage 36 de plaques positives et négatives alternées, qui sont séparées par les séparateurs 32. En outre un électrolyte est introduit dans le compartiment 28 pour générer une charge électrique.

L'empilage 36 est de préférence un empilage compressible avec alternance de plaques positives 30 et négatives 34, un séparateur 32 étant disposé entre des plaques ayant des polarités opposées. La figure 3 représente l'empilage 36 comportant une plaque positive 30, un séparateur 32 et une plaque négative 34, mais dans le cas de la présente invention on envisage un nombre quelconque de plaques et de séparateurs constituant la cellule 20.

Comme cela est représenté sur la figure 3, les plaques de batterie positives 30 comportent chacune une patte positive 38 qui s'étend à partir de ces plaques. La patte positive 38 s'étend vers l'extérieur à partir d'un bord et est décalée par rapport à un bord adjacent de la plaque de batterie positive 30, et ce d'une distance de décalage prédéterminée référencée 40.

Les plaques de batterie négatives 34 possèdent chacune une patte négative 42 qui s'étend à partir d'un bord et est décalée d'un bord adjacent, d'une distance de décalage prédéterminée référencée 44. Conformément à une forme de réalisation prise à titre d'exemple, les bords, à partir desquels les pattes 38 et 42 s'étendent, s'étendent suivant un même alignement, et les bords, à partir desquels les distances de décalage sont définies, sont opposés l'un à l'autre. Par conséquent, dans un état assemblé, les pattes positives 38 sont alignées et les pattes négatives 42 sont également alignées entre elles.

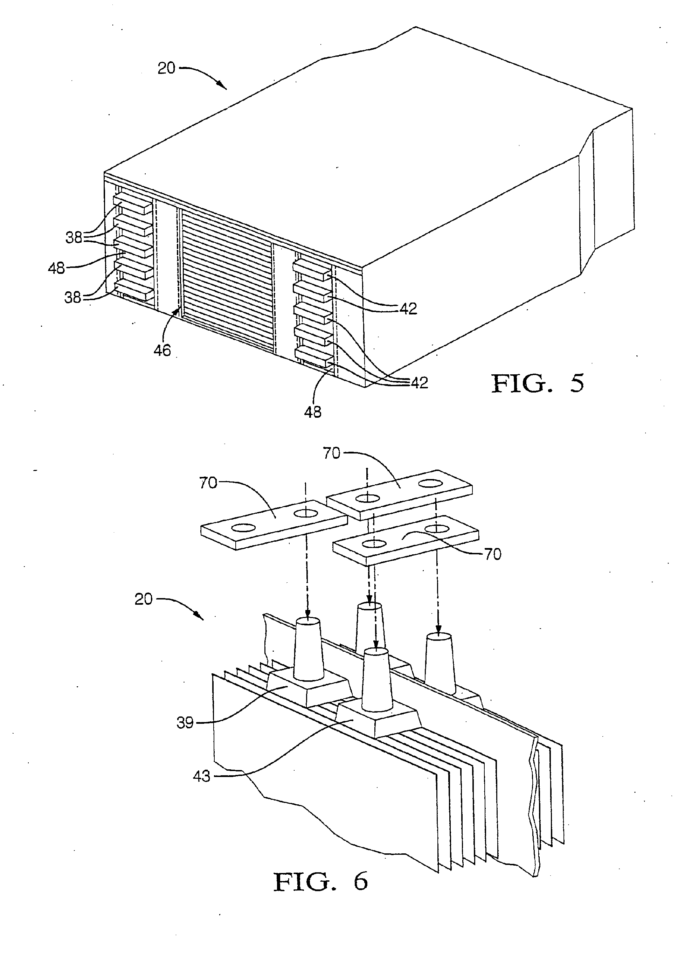

En se référant maintenant à la figure 5 et conformément à une forme de réalisation prise à titre d'exemple, une pluralité de plaques positives 30, de séparateurs 32 et de plaques négatives 34 sont insérés dans le compartiment interne 28 en étant placés en compression. Dans cette configuration, une pluralité de pattes positives et de pattes négatives s'étendent à partir d'une partie d'extrémité ouverte du compartiment 28.

A titre de variante, et comme cela est représenté par des lignes formées de tirets sur la figure 5, une partie d'extrémité 46 est fixée dans l'ouverture pénétrant dans le compartiment interne 28.

La partie d'extrémité 46 définit une paire d'ouvertures 48 servant à recevoir les pattes empilées 38 et 42. Par conséquent la partie d'extrémité 46 est configurée de manière à fixer l'empilage 36 dans la cellule 20 de telle sorte qu'une pluralité de pattes positives sont situées à une extrémité et qu'une pluralité de pattes négatives sont situées à l'autre extrémité.

Les pattes positives sont fixées à un étrier à barrette positive 39 et les pattes négatives sont fixées à un étrier à barrette négative 43 (figures 6 à 8). Dans cette forme de réalisation prise à titre d'exemple, les étriers à barrette 39 et 43 sont des pièces coulées en plomb comportant un plot. Les étriers sont des "étriers coulés" et sont coulés sur les pattes positives ou négatives.

En se référant maintenant à la figure 1, les parois latérales 14 du boîtier 10 de la batterie sont configurées de manière à loger une cellule 20. Ceci est facilité par le fait que les parois latérales 14 définissent une partie d'extrémité inférieure complémentaire 62, une partie supérieure 64 et une partie de transition 66 pour recevoir la cellule 20 et s'appliquer contre cette dernière. En outre, chacune des parties mentionnées précédemment qui sont définies par les parois latérales 14, sont également définies par une paire de parois de guidage 68 configurées de manière à faire saillie vers l'extérieur à partir de la surface intérieure des parois latérales 14 et du fond 12. Par conséquent, et lorsque des cellules 20 sont insérées dans la zone 18, la configuration extérieure des cellules 20 permet à chaque cellule individuelle de s'engager et d'être reçue dans une zone de réception complémentaire du boîtier 10 de la batterie.

Conformément à une forme de réalisation prise à titre d'exemple, une batterie de 36 volts est constituée par un boîtier 10 qui est configuré de manière à recevoir et maintenir dix-huit cellules délivrant chacune environ 2,1 volts. Chaque cellule possède une pluralité de pattes positives et négatives disposées sur des côtés opposés de la cellule. Les pattes positives sont fixées à un étrier à barrette positive 39, et les pattes négatives sont fixées à un étrier à barrette négative 43 (figures 6 à 8). En variante, chaque cellule peut être configurée de manière à recevoir et maintenir une pluralité de plaques positives, de plaques négatives et de séparateurs pour fournir des tensions supérieures ou inférieures à 2,1 volts.

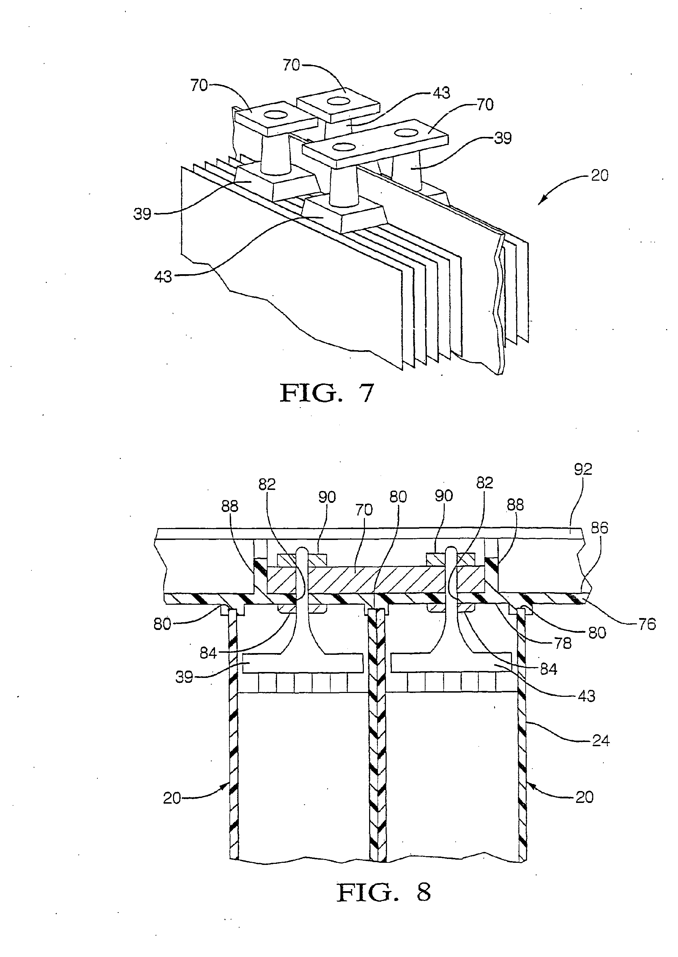

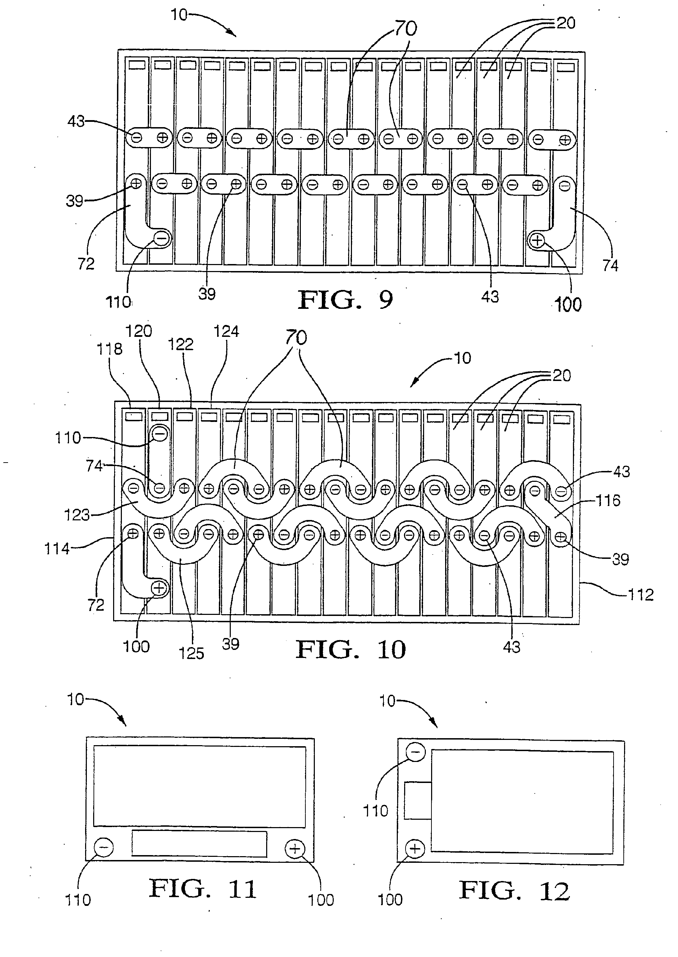

En se référant maintenant aux figures 7 et 9, les cellules sont insérées de telle sorte que chaque ensemble de pattes positives et l'étrier à barrette correspondant sont adjacents à un ensemble de pattes négatives et à un étrier à barrette correspondant, selon une disposition alternée. Par conséquent au moyen des étriers à barrette 39 et 43, les cellules sont positionnées de façon à être fixées entre elles en série de manière à fournir une batterie délivrant 36 volts.

Les figures 1, 9 et 10 représentent un boîtier de batterie 10 agencé pour fournir 36 volts au moyen d'un ensemble de dix-huit cellules. D'autres configurations sont également envisagées, comme par exemple une configuration incluant, mais sans qu'il n'y ait là aucune limitation, une seule rangée contenant plus ou moins de dix-huit cellules. En outre, il est envisagé que le boîtier 10 de la batterie soit configuré de manière à fournir des tensions variables supérieures ou inférieures à 36 volts avec une seule rangée de cellules. Par conséquent, le boîtier 10 de la batterie est configuré de manière à fournir une batterie comportant les capacités désirées en courant et en tension.

Dans une forme de réalisation prise à titre d'exemple en référence aux figures 7 à 9, le boîtier 10 de la batterie est représenté avec dix-huit cellules insérées dans l'ouverture 18. Chaque cellule est insérée selon une disposition alternée de sorte que les pattes ayant des polarités opposées sont adjacentes entre elles. Ceci permet aux pattes de connecter, par l'intermédiaire des étriers à barrette, chaque élément de cellule en série, de manière à réaliser une batterie fournissant la tension requise.

Pour raccorder les étriers à barrette adjacents, il est prévu une pluralité d'inserts métalliques 70 servant à former des moyens pour connecter électriquement les plots d'une plaque négative aux plots de la plaque positive adjacente. Les inserts métalliques 70 sont de préférence réalisés en plomb ou en cuivre.

A une extrémité de la pluralité de cellules sont disposés un étrier positif ouvert avec un plot 72, qui dans ce cas fournit une connexion de borne positive pour la batterie, et sur l'extrémité opposée, il est prévu une plaque négative ouverte 74, qui dans cette forme de réalisation fournit la connexion pour la borne négative à une extrémité de la batterie.

De cette manière, les cellules 20 disposées avec l'orientation décrite plus haut dans le boîtier 10 fournissent une forme de réalisation prise à titre d'exemple pour le positionnement et la connexion de cellules en série, qui conduit à un positionnement usuel ou commun de la borne positive 100 et de la borne négative 110 situées sur des extrémités opposées du boîtier 10 de la batterie ou sur le grand côté de la batterie comme représenté sur la figure 11.

Sur la figure 8 est représentée une coupe transversale de la connexion pour une paire de cellules. Après que les cellules 20 ont été insérées dans le boîtier 10, on introduit un premier capot 76 dans le boîtier 10 de la batterie, ce capot étant configuré de manière à coopérer avec les cellules 20. Le premier capot 76 possède une surface inférieure 78 présentant une pluralité de canaux ou de zones de réception 80, configurée de manière à s'appliquer contre les parois 24 des cellules 20.

Le premier capot 76 est adapté pour s'appliquer à la fois contre les cellules et contre le boîtier de la batterie après y avoir été inséré. Puis on fixe en position le premier capot au moyen d'un procédé de thermoscellement. D'autres procédés de fixation incluent, sans qu'il n'y ait là aucune limitation, l'utilisation d'adhésif, un empilage thermique, une soudage par vibrations, un soudage par ultrasons et des équivalents de tels procédés.

En raison de la surépaisseur des cellules 20 qui est égale à environ 20 mm, la taille de cellule 20 ne permet pas aisément la mise en oeuvre de procédés de soudage (par exemple par « extrusion et fusion ») à travers les cloisons de séparation de la cellule. Par conséquent les cellules sont soudées entre elles entre un premier capot et un capot extérieur de la batterie. Ce processus est illustré sur la figure 8.

Le premier capot 76 est configuré de manière à posséder une pluralité d'ouvertures 82 par lesquelles peuvent passer une partie des plots des étriers à barrettes 39 et 43. En outre un joint torique 84 est disposé de manière à établir une étanchéité autour des bornes traversant les ouvertures 82.

Une surface supérieure 86 du premier capot 76 est configurée de manière à posséder une pluralité parois de retenue 88 positionnées pour retenir l'insert métallique 70 lorsque ce dernier est inséré dans une zone définie par les parois de retenue 88.

Par conséquent, et ce à nouveau conformément à une forme de réalisation prise à titre d'exemple, on introduit l'insert métallique 70 dans la zone définie par les parois de retenue 88. L'insert métallique 70 est précoulé ou estampé et configuré de manière à être inséré dans cette zone définie. L'insert métallique 70 comporte une ouverture permettant le passage des bornes des étriers à barrettes 39 et 43 lorsque l'insert est placé dans la position désirée. Les bagues toriques 84 empêchent une fuite au travers du premier capot 76 lorsque les bornes sont soudées aux inserts, étant donné que la chaleur émanant du processus de soudage peut faire fondre une partie de l'insert métallique.

Une fois que l'insert métallique a été inséré, on soude les plots des étriers à barrettes 39 et 43 aux inserts métalliques 70 moyennant l'utilisation d'un soudage à tungstène sous gaz inerte (TIG) formant une soudure 90.

Comme étape finale, on installe un capot extérieur 92 du boîtier de la batterie sur le capot intérieur 76 et sur les soudures associées.

On fixe le capot extérieur 92 à l'aide d'une liaison par adhésif, d'un soudage ultrasonique ou au moyen d'autres procédés de fixation.

Ainsi, on place un premier capot sur les bornes des plaques des cellules individuelles. On prévoit une pluralité d'inserts métalliques pour le soudage de bornes adjacentes entre elles et une fois que les soudages sont terminés, on fixe un capot extérieur sur la batterie conformément à des processus préférés de fabrication.

En se référant maintenant aux figures 10 et 12, est représentée une autre forme de réalisation prise à titre d'exemple d'une batterie comportant dix-huit cellules 20 disposées en série à l'intérieur du boîtier de batterie 10, des bornes positive 100 et négative 110 étant disposées sur un côté du boîtier de la batterie. Dans certaines applications, il est préférable que les bornes formées par les plots de la batterie soient disposées d'un seul côté de la batterie et non sur des côtés opposés. La configuration de bornes positive 100 et négative 110 représentée sur la figure 12 est usuelle pour des batteries de camions, par exemple dans lesquelles les bornes 100 et 110 sont disposées sur le côté gauche ou le côté droit de la batterie en référence à la figure 12.

En se référant maintenant à la figure 10, est représenté le boîtier 10 de la batterie dans laquelle sont insérées dix-huit cellules. Un groupe constitué de deux cellules 20 est formé conjointement selon un montage parallèle de sorte que des pattes ayant une polarité similaire sont adjacentes les unes aux autres en formant un groupe de deux cellules 20. Chaque groupe est inséré selon un agencement alterné de sorte que les pattes ayant des polarités opposées sont adjacentes entre elles d'un groupe au suivant. De ce fait les pattes peuvent, au moyen d'étriers à barrettes, connecter chaque cellule en série de manière à former une batterie fournissant la tension requise.

Pour connecter les étriers à barrettes entre eux, on prévoit une pluralité d'inserts métalliques 70 pour former des moyens de connexion électrique des plots d'une plaque négative aux plots d'une plaque positive, avec une cellule 20 intercalée, hormis au niveau d'une première extrémité 112 située à l'opposé d'une seconde extrémité 114, où des bornes positive 100 et négative 110 sont situées. Sur la première extrémité 112, un insert métallique 116 est configuré de manière à connecter des pattes ayant une polarité opposée par l'intermédiaire des étriers à barrette correspondants des cellules adjacentes 20 formant le groupe disposé à la première extrémité 112. Les inserts métalliques 70 et 116 sont de préférence réalisés en plomb ou en cuivre.

Au niveau de la seconde extrémité 114, une première cellule 118 inclut un étrier positif ouvert avec un plot 72, qui dans ce cas forme une connexion pour la borne positive 100 de la batterie, et une seconde cellule 120 adjacent à la première cellule 118 inclut un étrier négatif ouvert avec un plot 74, qui dans ce cas forme la connexion pour la borne négative 110 à cette extrémité de la batterie.

En se référant à nouveau à la figure 10, les cellules 20 disposées en série comme décrit précédemment forment un ensemble de 1 X 18 cellules pour une batterie délivrant 36 volts. Les cellules 20 sont connectées en série avec les inserts métalliques 70 et 116 tout en fournissant les bornes positive 100 et négative 110 au niveau de la seconde extrémité 114. On notera que les inserts métalliques 70 représentés sur la figure 10 sont réalisés essentiellement en forme de U, hormis l'insert métallique 116 connectant des cellules adjacentes 20 au niveau de la première extrémité 112. Les inserts métalliques 70 sont agencés en forme de U pour le raccordement d'une première cellule 118 à une troisième cellule 122, via des pattes de polarités opposées, par un premier insert métallique en forme de U 123, une seconde cellule 120 étant disposée entre la première cellule 118 et la troisième cellule 122. A son tour, la seconde cellule 120 est connectée à une quatrième cellule 124, avec la troisième cellule 122 intercalée, par l'intermédiaire d'un second insert métallique en forme de U 125 orienté de façon similaire au premier insert métallique en forme de U 123. De cette manière, chaque autre cellule est connectée jusqu'à ce que la première extrémité 112 soit atteinte, endroit où des cellules adjacentes sont connectées en utilisant l'insert métallique 116 configuré de manière à éviter un contact électrique avec les inserts métalliques en forme de U 70. Etant donné que les cellules adjacentes au niveau de la première extrémité 112 sont connectées, les cellules ayant des pattes exposées sont connectées en direction de la seconde extrémité 114 par des inserts métalliques en forme de U 70 orientés selon une disposition opposée à celle décrite précédemment pour éviter un contact électrique entre des inserts métalliques en forme de U 70 voisins. De cette manière, une borne positive 100 est connectée à une patte positive de la cellule 118 ayant une borne en forme de plot positif qui s'étend au-dessus de la cellule 120. De façon similaire, la borne négative 110 est connectée à une patte négative d'une cellule adjacente 120 comportant une borne correspondante formée d'un plot négatif, qui s'étend également au-dessus de la cellule 120. Ceci fournit les bornes positive 100 et négative 110 qui se situent d'un seul côté du boîtier 10 de la batterie même lorsque sont utilisés le boîtier de batterie, les mêmes cellules et les mêmes boîtiers de cellule que ceux utilisés pour former une configuration traditionnelle de bornes ou une configuration de bornes positive et négative disposées sur des extrémités opposées de la batterie ou sur le petit côté de la batterie comme représenté sur la figure 11.

On notera que, bien que l'on ait décrit des inserts métalliques 70 en forme de U avec une configuration en forme de U en référence à la figure 10, les inserts métalliques 70 peuvent avoir n'importe quelle configuration qui permet une connexion "sélective" entre une première cellule 118 et une troisième cellule 122, entre lesquels est intercalée une seconde cellule 120, tout en permettant une connexion de la seconde cellule 120 avec un autre insert métallique 70 à une quatrième cellule 124, sans aucune interférence électrique ou contact électrique entre les inserts métalliques. En outre, la poursuite du traitement et de l'assemblage de la batterie sont identiques à ce qui est décrit en référence à la figure 9 sur laquelle des bornes 100, 110 sont situées sur des extrémités opposées de la batterie.

Par conséquent, si un client désire une configuration de bornes aux extrémités (figure 12) qui diffère d'une configuration traditionnelle (figure 11), on peut utiliser le même boîtier de batterie, la même configuration d'éléments de cellules et la même configuration de cellules de la batterie (par exemple 1 X 18 cellules pour une batterie de 36 V), l'orientation spécifique de chaque cellule étant modifiée et un insert métallique étant adapté de manière à établir une connexion en série entre des cellules tout en permettant un positionnement désiré de bornes formant plots par rapport au boîtier. Ceci entraîne une réduction de coût en raison de l'utilisation de boîtiers, de plaques et d'outils existants, tout en permettant un positionnement différent des bornes formées de plots de la batterie par rapport à l'extérieur de la batterie pour une connexion ultérieure avec un dispositif extérieur. En outre, le procédé et le dispositif décrits ici fournissent une variante simple pour l'obtention d'un positionnement différent des bornes formées de plots sans passer à une pluralité de rangées de cellules (par exemple 2 x 9 cellules pour une batterie de 36 V).

Bien que l'invention ait été décrite en référence à une forme de réalisation prise à titre d'exemple, les spécialistes de la technique comprendront que différentes modifications peuvent y être apportées et que des équivalents peuvent être substitués aux formes de réalisation sans sortir du cadre de l'invention. En outre de nombreuses modifications peuvent être faites pour adapter une situation particulière ou un matériau particulier aux enseignements de l'invention sans sortir du cadre de cette dernière. C'est pourquoi il est prévu que l'invention n'est en aucune manière limitée à la forme de réalisation particulière décrite en tant que meilleur mode de mise en oeuvre envisagé pour la présente invention.

## Revendications

1. Batterie comportant une pluralité de cellules, **caractérisée en ce qu'**elle comprend:
- une pluralité de cellules (20) possédant chacune un plot positif et un plot négatif s'étendant à partir de la cellule, chaque cellule étant disposée dans un boîtier de batterie (10) possédant une configuration interne apte à recevoir ladite cellule, chaque cellule possédant ledit plot positif et ledit plot négatif dans une orientation, par rapport audit boîtier de la batterie, convenant pour obtenir une configuration désirée de bornes en forme de plots (100, 110) de la batterie, et
- une pluralité d'inserts métalliques (70) servant à connecter électriquement en série chaque cellule (20) de ladite pluralité de cellules, ladite pluralité d'inserts métalliques étant adaptée pour établir un contact électrique sélectif entre un plot positif d'une première cellule et un plot négatif d'une seconde cellule de ladite pluralité de cellules, et pour fournir la configuration désirée de bornes en forme de plots (100, 110) de la batterie.

2. Batterie selon la revendication 1, **caractérisée en ce que** chaque cellule (20) comprend un élément de cellule, le boîtier de batterie (10) définissant une zone de réception (18) et étant configuré de manière à recevoir la pluralité d'éléments de cellule, un élément de cellule comprenant une pluralité de plaques positives (30) possédant chacune une partie formant patte positive (38) qui s'étend vers l'extérieur à partir de la périphérie de la plaque, et une pluralité de plaques négatives (34) possédant chacune une partie formant patte négative (42) s'étendant vers l'extérieur à partir de la périphérie de la plaque, un séparateur non conducteur (32) étant disposé entre chaque plaque positive (30) et chaque plaque négative (34) adjacentes, chaque élément de cellule comprenant :
- une barrette positive (39) fixée à chacune desdites parties en forme de pattes positives (38) dudit élément de cellule, ladite barrette positive comportant le plot positif de l'élément de cellule, et
- une barrette négative (43) fixée à chacune desdites parties en forme de pattes négatives (42) dudit élément de cellule, ladite plaque négative comportant le plot négatif de l'élément de cellule,
et **en ce que** la batterie comporte un capot intérieur (76) configuré de manière à recouvrir lesdites plaques positives (30) et négatives (34), ledit capot intérieur étant configuré de manière que lesdits plots positifs et lesdits plots négatifs le traversent.

3. Batterie selon la revendication 2, **caractérisée en ce que** ledit insert métallique (70) connecte électriquement un plot positif d'un premier élément de cellule à un plot négatif d'un second élément de cellule, ledit second élément de cellule étant soit un élément de cellule contigu, soit un élément de cellule éloigné présentant au moins un autre élément de cellule disposé entre les premier et second éléments de cellule.

4. Batterie selon la revendication 2 ou 3, **caractérisée en ce que** chacun desdits éléments de cellule est connecté en série pour fournir au moins deux configurations différentes de bornes en forme de plots (100, 110) de la batterie par rapport audit boîtier (10) de la batterie.

5. Batterie selon l'une quelconque des revendications 2 à 4, **caractérisée en ce qu'**une pluralité de parois de retenue entourent une paire d'ouvertures (82) configurées de manière à permettre le passage d'un plot positif et d'un plot négatif d'éléments de cellule adjacents.

6. Batterie selon la revendication 3, **caractérisée en ce que** lesdites ouvertures (82) comportent chacune un joint torique (84) configuré de manière à recevoir et à coopérer avec une partie dudit plot positif et dudit plot négatif lorsque ces derniers traversent lesdites ouvertures.

7. Batterie selon l'une quelconque des revendications 2 à 6, **caractérisée en ce que** ledit capot intérieur (76) définit une pluralité de zones de réception servant à recevoir ledit insert métallique (70).

8. Batterie selon la revendication 7, **caractérisée en ce que** ladite pluralité de zones de réception est définie par une pluralité de parois de retenue (88).

9. Batterie selon l'une quelconque des revendications précédentes, **caractérisée en ce que** chaque cellule (20) possède une configuration extérieure agencée de manière à être reçue à l'intérieur d'une zone de réception complémentaire définie dans ledit boîtier (10) de la batterie.

10. Batterie selon l'une quelconque des revendications précédentes,
**caractérisée en ce que** ledit insert métallique (70) est un insert en plomb ou en cuivre.

11. Batterie selon l'une quelconque des revendications précédentes, **caractérisée en ce que** la pluralité de cellules (20) sont alignées suivant une seule rangée.

12. Batterie selon l'une quelconque des revendications précédentes, **caractérisée en ce que** ladite configuration désirée des bornes en forme de plots (100, 110) de la batterie inclut une borne en forme de plot positive (100) et une borne en forme de plot négative (110) disposées sur au moins une des extrémités ou sur les deux extrémités du boîtier (10) de la batterie.

13. Batterie selon l'une quelconque des revendications 2 à 12, **caractérisée en ce que** ledit insert métallique (70) inclut un premier insert métallique configuré de manière à connecter électriquement un plot positif d'un premier élément de cellule à un plot négatif d'un second élément de cellule, le second élément de cellule étant un élément de cellule contigu.

14. Batterie selon l'une quelconque des revendications 2 à 12, **caractérisée en ce que** ledit insert métallique (70) inclut un second insert métallique configuré de manière à connecter un plot positif d'un premier élément de cellule à un plot négatif d'un second élément de cellule, ledit second élément de cellule étant éloigné dudit premier élément de cellule, avec au moins un autre élément de cellule intercalé entre ces éléments de cellule.

15. Batterie selon l'une quelconque des revendications 2 à 14, **caractérisée en ce que** chaque élément de cellule de ladite pluralité d'éléments de cellule est placé dans l'un des groupes formés soit de deux éléments de cellule soit d'un seul élément, les barrettes d'un groupe étant alignées avec les barrettes ayant une polarité opposée d'un groupe contigu.

16. Batterie selon la revendication 15, **caractérisée en ce que** les barrettes ayant des polarités similaires des cellules de chacun desdits groupes formés de deux éléments de cellule sont alignées.

17. Procédé d'assemblage d'une batterie possédant une pluralité de cellules, **caractérisé en ce qu'**il consiste à:
- choisir une configuration désirée de bornes en forme de plots (100, 110) de la batterie,
- insérer une pluralité de cellules (20) possédant chacune un plot positif et un plot négatif, qui s'étendent à partir des cellules, dans un boîtier de batterie (10) possédant une configuration interne servant à recevoir ladite cellule, chaque cellule possédant lesdits plots positif et négatif étant insérée dans une orientation convenant pour obtenir ladite configuration désirée des bornes en forme de plots de la batterie, et
- connecter électriquement en série chaque cellule (20) de ladite pluralité de cellules (20) en prévoyant une pluralité d'inserts métalliques (70) pour établir un contact sélectif entre un plot positif d'une première cellule et un plot négatif d'une seconde cellule de ladite pluralité de cellules.

18. Procédé selon la revendication 17, **caractérisé en ce que** lesdits inserts métalliques (70) sont soudés audit plot positif et audit plot négatif de cellules différentes de ladite pluralité de cellules (20).

19. Procédé selon la revendication 17 ou 18, **caractérisé en ce que** lesdits inserts métalliques (70) sont disposés au-dessus d'une partie formant capot (76) insérée entre ladite pluralité de cellules (20) et lesdits inserts métalliques, une partie desdits plots positifs et une partie desdits plots négatifs traversant des ouvertures (82) situées dans ladite partie formant capot (76).

20. Procédé selon l'une quelconque des revendications 17 à 19, **caractérisé en ce que** le choix d'une configuration désirée des bornes en forme de plots (100, 110) de la batterie inclut le choix que les bornes en forme de plots de la batterie soient disposées à une extrémité ou bien aux deux extrémités de la batterie.

21. Procédé selon la revendication 20, **caractérisé en ce que** le choix de ladite configuration des bornes en forme de plots (100, 110) de la batterie aux deux extrémités de la batterie inclut l'insertion d'une première cellule (118) et d'une seconde cellule (120) ayant des plots positifs et négatifs dans une même orientation, des troisième (122) et quatrième (124) cellules contiguës ayant des plots positifs et négatifs orientés dans un sens opposé à ceux desdites première et seconde cellules.

22. Procédé selon la revendication 21, **caractérisé en ce que** ladite première cellule (118) est connectée électriquement à ladite troisième cellule (122) par des plots correspondants ayant des polarités opposées, ladite seconde cellule (120) étant disposée entre lesdites première et troisième cellules, et **en ce que** ladite seconde cellule est connectée électriquement à ladite quatrième cellule (124) par des plots correspondants ayant des polarités opposées, ladite troisième cellule étant intercalée entre lesdites seconde et quatrième cellules.

23. Procédé selon la revendication 21 ou 22, **caractérisé en ce que** deux cellules éloignées situées à l'opposé desdites bornes formées de plots (100, 110) positive et négative sont connectées en série par des plots ayant des polarités opposées.

24. Procédé selon la revendication 20, **caractérisé en ce que** le choix de la configuration des bornes en forme de plots (100, 110) de la batterie sur des extrémités opposées de la batterie inclut l'insertion de chaque cellule (20) ayant des plots positif et négatif avec une même orientation suivant laquelle chaque cellule contiguë possède des plots positif et négatif ayant une orientation opposée.

25. Procédé selon la revendication 24, **caractérisé en ce que** chaque cellule (20) est connectée électriquement à une cellule contiguë par l'intermédiaire de plots correspondants ayant une polarité opposée.
